(19) **Europäisches Patentamt / European Patent Office / Office européen des brevets**

(11) **EP 4 233 001 B1**

(12) **EUROPEAN PATENT SPECIFICATION**

(45) Date of publication and mention of the grant of the patent:
**13.08.2025 Bulletin 2025/33**

(21) Application number: **21790189.1**

(22) Date of filing: **09.10.2021**

(51) International Patent Classification (IPC):
**G06T 7/11** (2017.01)    **G06T 7/12** (2017.01)
**G06T 7/149** (2017.01)    **G06T 7/194** (2017.01)

(52) Cooperative Patent Classification (CPC):
**G06T 7/11; G06T 7/12; G06T 7/149; G06T 7/194;**
G06T 2207/10072; G06T 2207/10116;
G06T 2207/10132; G06T 2207/20084;
G06T 2207/20116; G06T 2207/20124;
G06T 2207/20224; G06T 2207/30004

(86) International application number:
**PCT/EP2021/077972**

(87) International publication number:
**WO 2022/084074 (28.04.2022 Gazette 2022/17)**

(54) **DETECTING ANATOMICAL ABNORMALITIES BY SEGMENTATION RESULTS WITH AND WITHOUT SHAPE PRIORS**

ERKENNUNG ANATOMISCHER ANOMALIEN DURCH SEGMENTIERUNGSERGEBNISSE MIT UND OHNE FORMPRIORITÄTEN

DÉTECTION D'ANOMALIES ANATOMIQUES PAR RÉSULTATS DE SEGMENTATION AVEC ET SANS A PRIORI SUR LES FORMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2020 EP 20202844**

(43) Date of publication of application:
**30.08.2023 Bulletin 2023/35**

(73) Proprietor: **Koninklijke Philips N.V.**
**5656 AG Eindhoven (NL)**

(72) Inventors:
• **BUERGER, Christian**
  **5656 AE Eindhoven (NL)**
• **VON BERG, Jens**
  **5656 AE Eindhoven (NL)**

• **LENGA, Matthias**
  **5656 AE Eindhoven (NL)**
• **LORENZ, Cristian**
  **5656 AE Eindhoven (NL)**

(74) Representative: **Philips Intellectual Property & Standards**
**High Tech Campus 52**
**5656 AG Eindhoven (NL)**

(56) References cited:
**EP-B1- 1 851 722**

• **CHEN CHEN ET AL: "Deep learning for cardiac image segmentation: A review", ARXIV.ORG, CORNELL UNIVERSITY LIBRARY, 201 OLIN LIBRARY CORNELL UNIVERSITY ITHACA, NY 14853, 9 November 2019 (2019-11-09), XP081529510**

**Description**

FIELD OF THE INVENTION

The invention relates to a system for image processing, to an image processing method, to a computer program element, and to a computer readable medium.

BACKGROUND OF THE INVENTION

Medical images are often used for diagnostic purposes. One such diagnostic purpose is examination of such images by a human observer for anatomical abnormalities. Examples of such anatomical abnormalities include bone fractures (abnormality relative to a healthy unbroken bone), tumorous tissue (abnormality relative to organs without lesion).

However, inspection of potentially hundreds of image slices in a 3D image volume for example, is time consuming and prone to errors because of dependency on capabilities of a human observer. This is compounded by instances where the abnormalities are reflected in the images as minute image structures, not easily discernable to even the schooled eye. What is more, such examinations are often required under time pressure in stressful environments, such as in a busy trauma clinic for example.

SUMMARY OF THE INVENTION

There may therefore be a need for improved image segmentation.

The object of the present invention is achieved by the subject matter of the independent claims where further embodiments are incorporated in the dependent claims. It should be noted that the following described aspect of the invention equally applies to the image processing method, to the computer program element and to the computer readable medium.

According to a first aspect of the invention there is provided a system according to claim 1.

In embodiments, the system comprises a visualizer configured to output an indication of the said difference.

In embodiments, the visualizer is to effect display on a display device (DD) of the indication and i) the input image and/or ii) the first or second segmentation map.

In embodiments, the said indication is coded to represent a magnitude of said difference. Visualization of the said difference, although preferred herein, may not necessarily be required in all embodiments: for example, it may be sufficient to cause a message to be sent out via communication system, to sound out a sound, activate a lamp, or cause any other alert signal if such an abnormality is detected. The difference may be thresholded to conclude there is such an abnormality present as per the medical input image in relation to a patient.

In embodiments, the second segmentor is based on a machine learning model and related algorithm.

In embodiments the machine learning algorithm is based on an artificial neural network, but other machine learning models capable of classification/segmentation are also envisaged herein.

In embodiments, the segmentations in the two segmentation maps represent any one or more of i) bone tissue, ii) cancerous tissue.

The system may be used to detect bone fractures for example, due to the different manners of operation of the two segmentation algorithms. The ascertained difference may thus be indicative of bone fracture.

What is proposed herein is to apply two different segmentation algorithms one with and the other without explicitly encoded shape priors, and to detect anatomical abnormalities by comparing the segmentation results as provided by both algorithms. For example, considering the detection of spine fractures in CT (computed tomography), in embodiments a model-based segmentation (MBS) technique is applied. MBS-algorithms are a class of algorithms that incorporates shape priors. For example, shape priors may be used for different vertebrae, to segment for vertebrae that are visible in the field of view. In addition, a deep-learning (DL) based segmentation technique may be used that is purely (or at least predominantly) considering image intensities and that does not encode a shape prior. We harness herein the different modes of operation of two different segmentation algorithms, with and without shape priors. By comparing the results, any bone fractures may be easily detected. Shape prior-based algorithms, such as MBS-type segmentation techniques, tend to favor results that maintain the topological connectedness of the shape priors, whilst there is no such bias in non-shape-prior-based approaches, such as in ML algorithms more generally. Whilst ML approaches are preferred for the second segmentor, this is not a requirement for all embodiments. In some embodiments, such shape priors may still be used in the second segmentation algorithm, but this should be configured so that less weight is given to the shape priors relative to in-image information.

Shape-prior based algorithms, such as the MBS type algorithms or others as envisaged herein, use a set of virtual geometrical models, such as mesh-models. The shape priors are deformed during the segmentation operation to compute the segmentation result. Shape priors represent shape prototypes. Shape priors model the shape of an organ or anatomy for example, based on a reference publication (generated prior to segmentation). The shape priors may be topologically connected. They may be implemented as mesh models, held in a library and accessed by the first segmentor that uses shape priors. Shape priors encode prior shape knowledge, such as clinical knowledge of anatomies and their shapes and deformations such anatomies are capable of. No such mesh models are used for example in most ML (machine learning)-based segmentation algorithms to compute the segmentation result. The segmentation result may be the segmented image. The segmented image includes the original image and a segmentation map that classifies image elements. In embodiments the segmentation result includes the segmentation map without the original image. The segmentation may be binary or multi-label.

In embodiments, the input image is any one of i) an X-ray image, ii) an emission image, iii) a magnetic resonance, MR, image. Any other imaging modality, such as ultrasound, or emission/nuclear imaging may also be used.

In an embodiment there is provided an imaging arrangement, comprising an imaging apparatus and the system in any of the above embodiment.

In another aspect, there is provided an image processing method according to claim 12.

In an embodiment there is provided a method of training the machine learning model.

In another aspect there is provided a computer program element including instruction(s), which, when being executed by at least one processing unit, is adapted to cause the processing unit to perform the method.

In another aspect still, there is provided at least one computer readable medium having stored thereon the program element, or having stored thereon the machine learning model.

Definitions

"*user*" relates to a person, such as medical personnel or other, operating the imaging apparatus or overseeing the imaging procedure. In other words, the user is in general not the patient.

"*imaging*" as used herein relates to inanimate "*object*(*s*)" or human or animal patient, or anatomic parts thereof, or imagery of biological interest, such as microscopic imagery of microbes, viruses etc. Inanimate objects may include an item of baggage in security checks or a product in non-destructive testing. However, the proposed system will be discussed herein with main reference to the medical field, so we will be referring mainly to the "*the patient*" or a part of the patient to be imaged, such as an anatomy or organ, or group of anatomies or organs of the patient.

In general, "*machine learning*" includes a computerized arrangement that implements a machine learning ("ML") algorithm. The machine learning algorithm is configured to learn from training data to perform a task, such as classification. Some machine learning algorithms are model-based. A model-based ML algorithm operates to adjust parameters of a machine learning model. This adjustment procedure is called "training". The model is thus configured by the training to perform the task. ML algorithms also include instance-based learning. Task performance by the ML algorithm improves measurably, the more (new) training data is used in the training. The performance may be measured by objective tests when feeding the system with test data. The performance may be defined in terms of a certain error rate to be achieved for the given test data. See for example, T. M. Mitchell, "Machine Learning", page 2, section 1.1, McGraw-Hill, 1997.

BRIEF DESCRIPTION OF THE DRAWINGS

Exemplary embodiments of the invention will now be described with reference to the following drawings, which, unless stated otherwise, are not to scale, wherein:

Figure 1 shows an imaging arrangement including a segmentation functionality;
Figure 2 shows segmentation results;
Figure 3 shows a flow chart of a method of image processing;
Figure 4 shows a block diagram of a machine-learning model;
Figure 5 shows a block diagram of a computer implemented training system for training a machine learning model; and
Figure 6 shows a flow chart of a method of training a machine-learning model based on training data.

DETAILED DESCRIPTION OF EMBODIMENTS

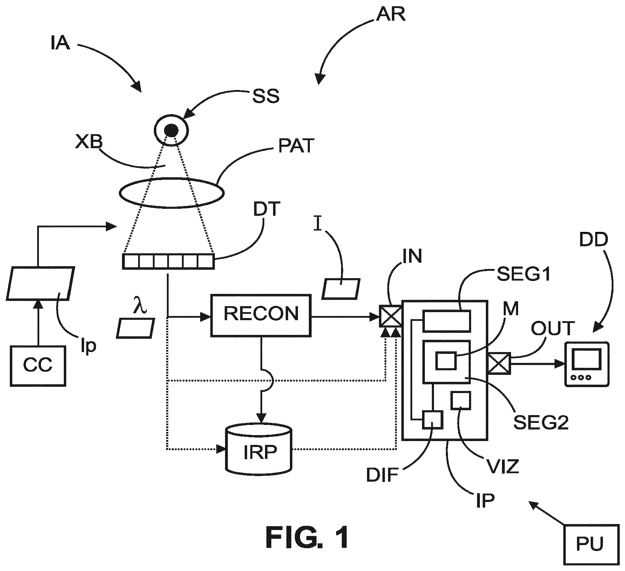

With reference to Figure 1, there is shown a computer-supported imaging arrangement AR.

The arrangement AR comprises, in embodiments, an imaging apparatus IA for supplying imagery and an image processing system IPS to process said imagery.

Very briefly, the image enhancement processor IPS includes a segmentation functionality, to facilitate medical diagnostics for medical abnormalities. Image-based detection of bone fractures is one example application envisaged herein. Other medical applications, but also those outside the medical field such as non-destructive material testing are also envisaged herein. Specifically, and as will be explored more fully below, the system uses two-channel segmentation to boost detection capability even of minute structural details, such as hairline fractures due to stress or osteoporosis, early-stage cancers, such as breast cancer, and others. Other applications of the proposed image processing system for segmentation includes contouring organs in radiation treatment planning.

The imaging apparatus IA (sometimes referred to herein simply as the "imager") is preferably envisaged herein for medical purposes and is operable to acquire one or more images of a patient PAT or other objects of interest. The imaging apparatus may the fixed, such as setup in a medical exam room in a medical facility, or may be mobile/portable.

Broadly, the imaging apparatus comprises a signal source SS to generate an interrogating signal XB. The interrogating signal XB interacts with tissue in patient PAT and is thereby modified (i.e., attenuated, redirected, or otherwise results in a measurable result). The modified signal is then detected by a signal detection unit DT. The detected signals, such as intensity values, form detector projection raw data or projection imagery. Projection imagery may be further processed by a reconstruction module RECON to produce reconstructed imagery $I$.

The imager IA envisaged herein is configured for structural or functional imaging. A range of imaging modalities is envisaged herein such as transmission imaging and emission imaging or others, such as ultrasound (US) imaging. For instance, in transmission imaging, such as x-ray based imaging, the signal source SS is an x-ray tube and the interrogating signal is an x-ray beam XB generated by the tube SS. In this embodiment, the modified x-ray beam impinges on X-ray sensitive pixels of the detection unit DT. The X-ray sensitive detector DT registers the impinging radiation as a distribution of intensity values. The registered intensity values form projection images $\lambda$. The X-ray projection images $\lambda$, although sometimes useful in their own right such as in x-ray radiography, may then be transformed into cross-sectional images in CT imaging by the reconstruction module RECON. Specifically, the reconstruction module RECON applies a reconstruction algorithm to the projection imagery, such as filtered back- projection or other algorithms. A cross-sectional image forms a 2D image in 3D space. In CT, a plurality of such cross-sectional images may be reconstructed from different sets of projection images to obtain a 3D image volume.

In MRI imagers, the detection unit is formed from coils, that are capable of picking up radiofrequency signals that represent the projection imagery, from which MRI cross-sectional images may be reconstructed by MRI reconstruction algorithms.

The X-ray imagery in CT or radiography represents structural details of the patient's anatomy, and so does MRI.

In emission imaging, such as PET or SPECT, the signal source SS may reside inside the patient in form of a previously administered radioactive tracer substance. Nuclear events caused by the tracer substance are then registered as projection images at a PET/SPECT detector DT arranged around the patient. A PET/SPECT reconstruction algorithm is then applied to obtain reconstructed PET/SPECT imagery that represents functional details of processes inside the patient, such as metabolic processes.

The imaging apparatus IA is controlled by an operator from an operator console CC. The operator can set a number of imaging parameters $Ip$ or can initiate or halt projection data acquisition.

Unless specifically stated, in the following, no distinction will be made between reconstructed images or projection images, and we will refer to both simply as "input image(s) or "imagery" $I$ to be processed by the image enhancement processor system IPS. In other words, the image processing system IPS may be configured therein to operate on imagery from projection domain or may act on imagery reconstructed in imaging domain. In line with what was described above, input image may be 2D with pixels values at locations $(i,j)$ or may be 3D, with voxel values at locations $(i,j,k)$ organized. Accordingly, the input image $I$ may be organized in a 2D or 3D data structure such as 2D or 3D matrix or matrices. The pixel/voxel values may represent the quantity of interest, such as in X-ray an attenuation value, a phase contrast value, a dark-field signal, etc. X-ray with spectral imaging is also envisaged. In other modalities such as MRI, the values may represent strength of an RF frequency signal, or a gamma photon count rate as in emission imaging, etc.

The input imagery $I$ produced by the apparatus IA is received at the imaging processor IPS at its interface IN, through wired or wireless communication means for example. The imagery $I$ may be received directly from the imaging apparatus IA, or may be retrieved from a memory, such as an image repository IRP or buffer where the imagery is stored first.

The image processor IPS may be run on one or more general purpose computing units or on one or more dedicated computing units. The (at least one) computing unit PU may be communicatively coupled to the imaging apparatus IA or to the imaging repository IRP. In other embodiments the image processor IP is integrated into the imaging apparatus IA. The imaging processor IP may be arranged in hardware or software, or in a combination of both. Hardware implementations may include suitably programmed circuitry, such as a microprocessor, an FGPA (field-programmable gate array) or other general purposes circuitry. Hard coded circuity is also envisaged herein such as an ASICS (application specific integrated circuit) or on-chip systems, or other. A dedicated processor, such GPU (graphical processing unit), may also be used.

Referring now in more detail to the operation with continued reference to Figure 1, the computer-implemented image processing system IPS includes segmentation functionality to segment imagery $I$ provided by the imaging apparatus IA or as retrieved from a medical image repository IRP for example.

Broadly, segmentation is the task of classifying an image per pixel or voxel level into labels. Alternatively, the classification is per larger image regions as whole, such as contours or surfaces. The labels represent a semantics of the respective pixel, voxel or image region. In this manner, for example a bone pixel, that is, a pixel having the label "bone", can be identified in the classification operation. The pixel is then thought to represent bone tissue, and so forth for other tissue types. Footprints of organs in the imagery can thus be identified by segmentation.

The segmented image is made up of a segmentation map that spatially indicates, for each pixel, voxel or image region, the respective label. One or more of such segmentation maps may thus indicate to the user different tissue types in the field of view captured by the image. The indication may be binary ("yes bone"/"no bone"), but multi-label segmentations into plural organs/tissues are also envisaged herein. Segmentation can aid in diagnosis. Medical applications envisaged herein and supportable by the segmentation functionality include examining imagery for medical abnormalities, such as cancerous tissue or trauma. An application specifically envisaged herein is examining imagery for bone fractures. Some fractures may be difficult to spot unaided, such as hairline fractures. If such fractures go unrecognized and unattended, this may lead to medical complications further down the line. The proposed segmentation functionality is particularly geared to ascertain in medical imagery even minute structures that may be a tell-tale for medical abnormalities, in particular bone fractures.

This enhanced resolution capability stems in part from the segmentation functionality being configured of the two-channel type. In particular, the input imagery I to be segmented is processed in two ways or "channels" by different segmentation algorithms. More particularly, the image processing system comprises two segmentation modules SEG1, SEG2 that are each implemented by a respective segmentation algorithm that differ from each other, or are at least configured differently. Each segmentation module operates differently on the input image I to compute the segmented image, in particular a segmentation map associated with the input image I. A respective segmentation map is the main result of any segmentation operation by SEG1, SEG2. Segmentation map is a function that assigns to each one element (pixel, voxel or region) a value that the respective element represents an object of interests, such as an anatomy, group of anatomies, tissue type etc. Bone is one example herein, but cancer tissue, brain tissue, and others are also envisaged herein. The said value may be a probability value. As a special case, the segmentation map may be a binary map with "1"/"0" entries. The segmentation map may be represented as a data structure such as a matrix in spatial registry with the image to be segmented, which each entry a normalized value, such as a probability estimate. As envisaged herein in some embodiments, one of the segmentation modules SEG1 is configured to operate based on a model-based segmentation ("MBS") type-algorithm. MBS algorithms have been reported elsewhere such as by O Ecabert et al in "Automatic model-based segmentation of the heart in CT images", published in IEEE Trans. Med. Imaging, vol 27(9), pp 1189-11201 (2008). MBS-type algorithms work by using one or more prototypical shape priors which the MBS algorithm attempts to fit to the imagery to effect or facilitate segmentation. However, MBS-type algorithms are not the only ones envisaged herein for shape-prior-based segmentor SEG1. Other segmentation algorithms that incorporate shape prior(s) are also envisaged herein, for example atlas-based segmentation approaches that register shape priors on imagery. Some machine learning approaches that incorporate prior shape knowledge in form of shape priors are also envisaged herein.

Shape priors are virtual geometrical shape models. One or more may be used. The shape priors may be stored in a computer memory. The shape priors may be implemented as mesh models. Mesh models are made up of interconnected mesh elements, such as polygons for example, that share edges and vertices with neighboring mesh elements. Mesh models can be stored in memory in a suitable data structure such as a matrix structure or pointer structure. Shape priors represent approximations of shapes of expected structures as recorded in medical imagery and are hence informed by prior medical knowledge. The shape priors are ideal prototypical shapes such as spheres, cylinders, pyramids, ellipsoids for the 3D case. For processing of 2D imagery, such as in a radiography, 2D shape priors may be used. However, real life structures as recorded in medical imagery will in general not have such ideal shapes, but may be understood as deformed, or perturbed, instances of the shape priors. Alternatively, instead of using shape priors as idealized geometrical primitives, "statistical" shape priors based on average measurements of a population is also envisaged herein in preferred embodiments. Such statistical shape priors may be obtained as follows. One collects imagery of a reference cohort of patients. The imagery is annotated by human experts for example, possibly assisted by semi-automatic segmentation tools. The imagery thus includes for example heart annotations. The shape prior may be generated as a mean heart shape with respect to the cohort. In this way one obtains a statistical shape prior, that is, a mean model that represents the mean geometrical appearance, of, for example, a heart, with respect to the reference cohort.

During operation of the shape-prior based segmentor SEG1, one or more such shape priors are geometrically deformed to adapt to the image structures in the input image I to so effect the segmentation or at least facilitate such segmentation. Image elements (voxels, pixels of larger image regions) located inside or on the surface of the fitted shape model S, are considered to represent the segmented object of interest (a tissue type, organ or group of organs) whilst image elements outside the fitted shape are not. Hence, the surface-based representation of the shape-prior-based segmentation can be converted to a binary segmentation result, such as a binary map. In addition to shape prior deformation, other factors may be taken into account by some shape-prior algorithm such as MBS algorithms, as will be explained in more detail below.

In sharp contrast thereto, in some embodiments, the segmentation algorithm implemented by the other segmentor module SEG2 does not use such shape priors. In particular, the second segmentor module SEG2 does not operate on deforming such shape priors. Shape prior based algorithms as implemented by SEG1 have a natural tendency to favor their library of prior shapes when deforming them to effect the segmentation. There is hence an inherent bias to the envisaged proto-typical shapes as embodied by the shape priors. Only segmentation results that are derivable by deformation from one or more shape priors are producible as output by segmentor SEG1. Specifically, large deviations from the shape prior are suppressed to only allow realistic / expected anatomical shape deformations. For example, deformations that do not lead to topologically connected results are not envisaged by the segmentor SEG1.

Generally, there is no such bias for such non-shape prior based algorithm as implemented by the second segmentor SEG2. Preferably and as envisaged herein, the second segmentation model SEG2 is implemented as a machine learning based-segmentor that uses machine learning models, suitably pre-adjusted based on previous training data. Non-exclusive examples envisaged herein include artificial neural-network type machine learning models. Others, such as support vector machines (SVM), or other machine learning models capable of classification tasks are also envisaged herein. For example, in an artificial neural network (NN) as envisaged herein in some embodiments of the second segmentor SEG2, there are no pre-conceived prior shape models that are explicitly adapted to the imagery in order to achieve the segmentation. The neural-network model itself is completely generic and as such does not favor any particular shape model type from the outset. Rather, it is the totality of an initial set of arbitrary initialized parameters of the machine learning model, sometimes called weights as explained in more detail below, that are commonly adjusted during training, based on the training data set to improve a cost function. Parameter adjustment may be done in an iterative manner, guided by an optimization algorithm, such as backpropagation algorithm or other gradient-based algorithms for example, or others still. It is also of note that the model-based segmentation algorithm of segmentor SEG1 is not based on such training data.

The different modes of operation of the two segmentation algorithms as administered by the two modules SEG1, SEG2 are harnessed herein to identify in the segmented imagery certain abnormalities such as fractures or cancerous tissue.

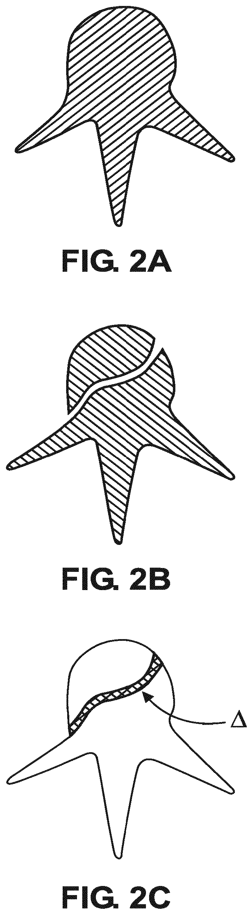

A basic mode of operation is shown in Figure 2. Figure 2A and 2B show segmentation results of the respective segmentation algorithms SEG1, SEG2. More particularly, Figures 2A and 2B illustrate segmentation of a fractured vertebra. A segmentation result from a segmentation with a shape prior as used by segmentor SEG1 is shown in Figure 2A, versus a segmentation without a shape prior by segmentor SEG2 in Figure 2B. As can be seen, segmentor SEG1 includes the abnormality (the fractured area) in the segmentation result due to the non-fractured vertebra shape prior that is used. Segmentor SEG2 does not use such a shape prior and hence labels all bony components as vertebra, while leaving out soft tissue as discernable in the space $\Delta$ left between the fractured components. Hence the difference between the segmentation results produced by the two segmentors SEG1,SEG2 allows detection of a fractured region.

The non-MBS algorithm, such as a machine learning algorithm, is not biased to specific prior shapes and their deformation variants, and such bias hence cannot prevent it from segmenting a given structure into topologically disconnected regions as shown in Figure 2B.

The model-based segmentation as in Figure 2A however, does not allow for segmentations that are not topologically connected. MBS maintains the integrity of its shape priors, due to the inherent bias towards its towards those shapes. As opposed to Figure 2B, no gap or discontinuity emerges in the MBS-based segmentation of Figure 2A.

Said differently, the non-model-based segmentation/segmentor SEG2, as shown for example in Figure 2B, is purely guided by image structures in the imagery that is processed such as intensity values. In contrast, the model-based segmentation algorithm/segmentor SEG1 in Figure 2A does not, or not only, consider image values, but attempts to fit its library of pre-defined shape priors. More specifically still, in model-based segmentation, the allowed deformations are configured to act continuously, thus excluding results that are topologically disconnected, or at least those were a discontinuities or gaps emerge. In MBS type algorithms, starting from topologically connected shape priors, the resulting segmentations, whilst deformed, remain topologically connected as in Figure 2A. A disconnected segmentation with gap $\Delta$ as in the example of Figure 2B is unlikely to ever occur with a purely model based approach as used by segmentation module SEG1. That being said, as an alternative, it may not necessarily be the case that the second segmentation algorithm SEG2 does not include shape priors at all. Rather, in this case, the second segmentation algorithm is configured to give higher weight to image structures or image values as recorded in the image rather than to its shape priors, as will be detailed below.

Turning first in more detail to the MBS-type algorithms as one embodiment of shape-prior based segmentations some such approaches use the concept of external and internal energies. The segmentation is formulated in terms of optimizing an objective function. The objective function $F$ includes at least two terms, one for internal energy $E_{int}$ one for external energy $E_{ext}$. The internal/external energies have been conceptualized for present purposes from elasticity theory. Deformations $D$ are assumed to incur a cost due to an inherent elasticity of the shape prior. The less elastic the shape prior is assumed, the higher the cost. The elasticity correlates with material or anatomical properties of the organs/tissues to be segmented as this is assumed known a priory.

The internal energy term $E_{int}$ represents the manner in which the shaped priors are to be deformed, whilst the second term $E_{ext}$ represents a processing of the image data as such. The internal energy term regulates how the model can deform to the image, but only within a realistic range. The external energy "pulls" the model towards in-image data. The contribution of each of the two terms to the total cost F can be controlled by certain weight parameters $\alpha, \beta \geq 0$:

$$\min_{\theta} F(\theta, I) = \alpha \cdot E_{int}(D(S), \theta) + \beta \cdot E_{ext}(I, \theta) \qquad (1)$$

wherein $\theta$ is the candidate segmentation, $I$ the input image, $D$ a deformation acting on shape prior $S$. The objective is to minimize F over segmentations $\theta$ to find the final best segmentation $\theta^*$. This may be the segmentation $\theta^*$ where F is a local or global minimum, or one where F drops under a pre-defined quality threshold. A gradient-based approach is used to iteratively adjust $\theta$ along gradient of F in steps until a stopping condition is met or until user decides to abort iteration. Whilst (1) is formulated as a minimization objective, the dual thereto is also envisaged where (1) may be formulated as a maximization of a utility function $F$: the ratio between control weights $\alpha, \beta$ determines the relative contribution to total cost F of shape prior fitting versus in-image information.

In embodiments it is envisaged that the second segmentation algorithm SEG2 is not necessarily of the machine learning type. It may be of the MBS-type still, so uses the above-described concepts of internal/external energies, but attaches a higher weight $\beta$ to the in-image information term $E_{ext}$ than to the weight $\alpha$ of the prior shape deformation term $E_{int}$. The prior-shape based segmentation algorithm is configured in an opposed manner: it uses a higher weight $\alpha$ for the prior shape deformation term $E_{int}$ as compared to weight $\beta$ for the image information term $E_{ext}$. In particular, if both segmentation algorithms SEG1, SEG2 use MBS, the weight $\alpha$ for the internal energy is higher for segmentation algorithm SEG1 than it is for segmentation algorithm SEG2.

Preferably however, SEG2 is not of the form (1) at all, and is based instead on trained machine learning model M without shape-priors, whilst SEG1 may implement an MBS-type algorithm configured to improve cost function (1). SEG1 may have no $E_{ext}$ term at all ($\beta=0$). Alternatively, $\beta>0$ but $\alpha > \beta$, in particularly $\alpha \gg \beta$, such as $\alpha/\beta > 2$ for example. But again, the MBS-type algorithm (1) is merely one embodiment of a shape-prior based algorithm, and any other prior-shape based algorithm for segmentor SEG1 is also envisaged, such as atlas based or other.

With continued reference to Figure 1, operation of the image processing system IPS with two-channel segmentation functionality is now described in more detail. At an input port IN the input image $I$ is received. The input image $I$ is processed by the two segmentation algorithms SEG1, SEG2 to produce respective different segmentation results, $I_1$ and $I_2$. The results may in particular include a (one or more) respective segmentation map.

The two segmentation results $I_1, I_2$, which are natively spatially registered to each other, are then compared to produce an indication of a medical abnormality such as an anatomical abnormality such as a fracture. More specifically in embodiments a differentiator DIF is used that performs a point-wise subtraction of the two segmentation maps $I_2$ and $I_1$, or segmented images, to produce a difference image/map. An example of such a difference image/map has been described above at Figure 2C.

A fixed or user defined threshold may be used to establish which image element in the difference image represents a relevant deviation between the two segmentation results. Image elements where the said difference exceeds this threshold are considered to be part of the indicator region which can be formed this way. An abnormality locator map can be compiled this way, which indicates for each image element whether there is or is not such a segmentation result deviation. The collection of all image elements that do represent such a deviation may be referred to herein as the deviation set DS. The deviation set DS is thus indicative of the anatomical abnormality one is seeking, such as bone fractures.

The deviation set may be processed by a visualizer VIZ into a color-coded or grey value coded overlay widget which can be overlaid displayed together with the input image or either one of the two segmentations $I_1, I_2$. The color- or grey-value may vary with magnitude across the deviation set.

Some or all of the imagery/map $I_1, I_2, DS$ may be displayed superimposed or displayed in different image planes concurrently on the display device DD for example. More particularly, in embodiments as an optional visualization aid for computer-assisted assisted reading, the regions of significant deviations SD between the output segmentations $I_1, I_2$, can be displayed using a color- or grey-value-coded overlay of the image. If applicable, the color/grey-value coded overlay may have the color or grey value vary with magnitude of deviation between the segmentations. For example, this may indicate the difference between a voxel/pixel-level probability responses of a neural network (e.g. a convolutional neural network CNN) versus the classification result provided by the shape-prior based segmentor SEG1, such as MBS segmentation.

The two-channel segmentation can thus facilitate abnormality detection to indicate deviations from healthy organ shapes. The proposed system IPS can be used to detect anatomical abnormalities based on medical images. For instance, in case of CT or radiography images, the system IPS allows detection of bone fractures resulting from trauma. Instead of, or in addition to visualizing the difference between the two maps, an alert signal or alert message may be generated based for example on thresholding the said difference values.

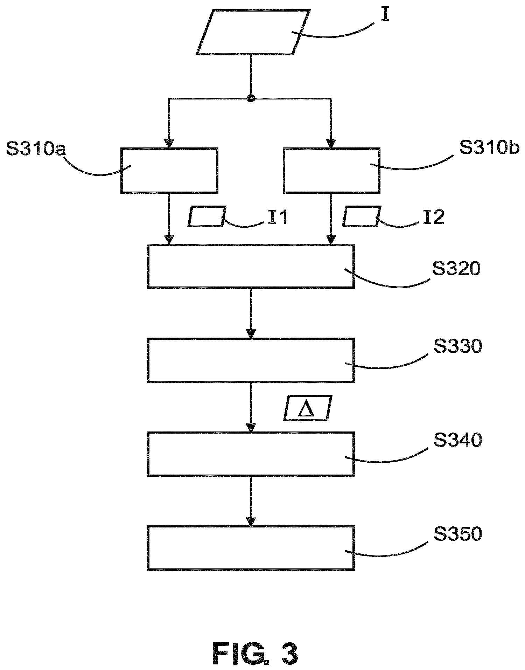

Reference is now made to Figure 3 which shows a flow chart of a method of image processing. Specifically, the described steps relate to two-channel segmentation as described above, but it will be understood that the following steps are not necessarily tied to the architecture discussed above and may be understood as a teaching in its own right.

At step S310a and S310b input image $I$, such as an x-ray image, is processed by two different segmentation algorithms or at least by two differently configured versions of the same segmentation algorithm.

Preferably, at step S310a the input image $I$ is processed into segmented image $I_1$ (shown as I1 in Figure 3) based on an algorithm that uses shape priors to compute the segmentation. A model-based segmentation-type algorithm is one example envisaged herein in embodiments.

At step S310b the input image $I$ is processed by a segmentation algorithm, that is not based at all on a shape prior model, to produce segmentation output $I_2$ (shown as $I_2$ in Figure 3). In embodiments, at least no explicit shape prior is used.

Preferably, step S310b is implemented by a machine learning model without shape priors, pre-trained on training data. Alternatively, and as explained above with reference to equation (1), the segmentation algorithm at step S310b may also a model based algorithm, but is configured to weigh contributions from shape prior adaptations less the contributions from in-image structures.

The order of steps S310a and S310b is immaterial.

At step S320 the two segmentation results $I_1$, $I_2$ are received and passed on to step S330 where the two images are compared. Specifically, a point-wise difference is formed between the two segmentation results/images $I_1$, $I_2$ to produce a deviation map or difference image $\Delta$.

At step S340, the difference image is analyzed to detect an anatomical abnormality, for example by comparing the difference values encoded in the difference image/map $\Delta$ to a pre-set significance threshold.

Image locations whose difference value exceeds a given threshold are considered to be part of a deviation set. The difference set can be color-coded or otherwise processed.

In step S350 the possibly processed color- or grey value encoded deviation set is displayed. This may include displaying the deviation set as an overlay in conjunction with one of the segmented input images $I_1$, $I_2$. In addition or instead, the deviation set is displayed in combination with the original input image, such as an overlay on the original input image $I$. Other display options are also considered herein, such as displaying the deviation set with any one or more of the imagery $I_1$, $I_2$, $I$ in any combination concurrently in different panes of a graphics display on a display device DD. In addition to or instead of so displaying, the thresholded difference map $\Delta$ may be used to generate an alert signal or message to inform a user that a medical abnormality has been detected.

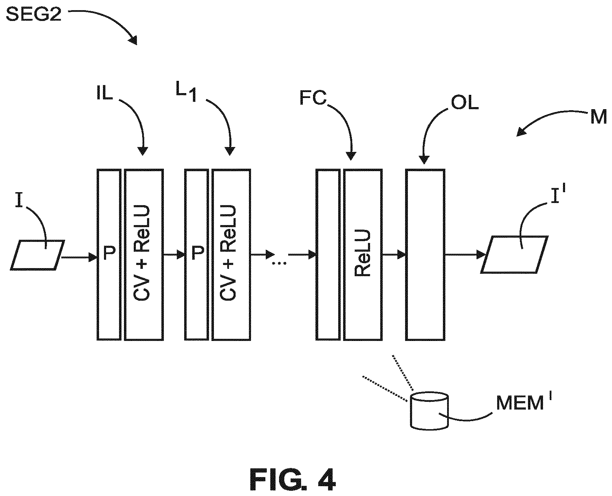

Reference is now made to Figure 4 which shows one embodiment of a machine-based implementation of the second non-shape-prior based segmentation algorithm SEG2. Figure 4 shows a schematic block diagram of a machine learning model M of the artificial neural network type. In particular, and in embodiments, an at least partially convolutional neural-network type ("CNN") is used, which includes one or more layers that are non-fully connected layers. The neural network M in Figure 4 is of the feed-forward type, but recurrent architectures are not excluded herein.

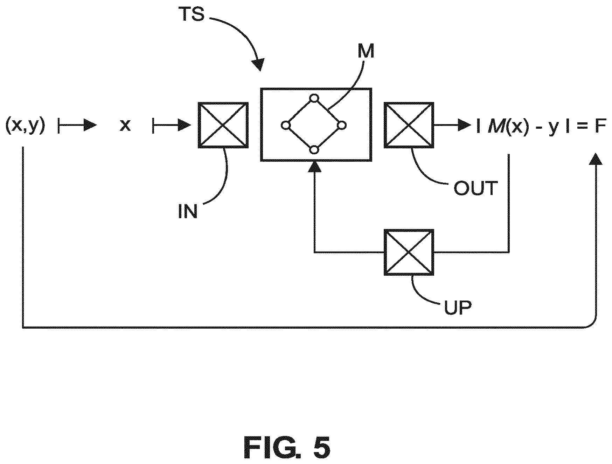

The model M may be trained by a computerized training systems TS to be described more fully below at Figure 5. In training, the training system TS adapts an initial set of (model) parameters $\theta$ of the model M. In the context of neural network models, the parameters are sometime referred to herein as network weights (these weights are unrelated to the weights $\alpha$, $\beta$ in (1) above). The training data may be generated by simulation or may be procured from existing historical imagery or other data as may be found in medical image database such as in a PACS (picture archiving and communication system) or similar as will be described in more detail below in relation to Figure 5.

Two processing phases may thus be defined in relation to the machine learning model: a training phase and a deployment (or inference) phase. In training phase, prior to deployment phase, the model is trained by adapting its parameters based on the training data. Once trained, the model may be used in deployment phase to segment new imagery encountered in daily clinical practice for example. The training may be a one-off operation, or may be repeated once new training data becomes available.

The machine learning model M may be stored in one (or more) computer memories MEM'. The pre-trained model M may be deployed as a machine learning component that may be run on a computing device PU, such as a desktop computer, a workstation, a laptop, etc or plural such devices in a distributed computing architecture. Preferably, to achieve good throughput, the computing device PU includes one or more processors (CPU) that support parallel computing, such as those of multi-core design. In one embodiment, GPU(s) are used.

Referring now in more detail to Figure 4, the network M comprises a plurality of computational nodes arranged in layers in a cascaded fashion, with data flow proceeding from left to right and thus from layer to layer. Recurrent networks are not excluded herein. Convolutional networks have been found to yield good result when processing image data.

In deployment, the input data is applied to input layer IL, such as the input image $I$ to be segmented, optionally complemented with contextual non-image data CXD. Contextual non-image data CXD describe or relate to the image data $I$. Contextual non-image data CXD my include bio-characteristics of the patient imaged in image $I$, or the imaging parameters $Ip$ used to acquire the input image. The input data $I$ then propagates through a sequence of hidden layers $L_1$-$L_N$ (only two are shown, but there may be merely one or more than two), to then emerge at an output layer OL as an estimate output $M(I)$. As per the embodiments described above, the output M(x) may be a segmented image I' or at least the related segmentation map.

The model network M may be said to have a deep architecture because it has more than one hidden layer. In a feed-forward network, the "depth" is the number of hidden layers between input layer IL and output layer OL, whilst in recurrent networks the depth is the number of hidden layers, times the number of passes.

The layers of the network, and indeed the input and output imagery, and the input and output between hidden layers (referred to herein as feature maps), can be represented as two or higher dimensional matrices ("tensors") for computational and memory allocation efficiency. The dimension and the number of entries represent the above-mentioned size.

Preferably, the hidden layers $L_1$ - $L_N$ include a sequence of convolutional layers that use convolutional operators CV. The number of convolutional layers may be at least one, such as 2-5, or any other number. Some hidden $L_m$ layer and the input layer IL may implement one or more convolutional operators CV. Each layer $L_m$ may implement the same number of convolution operators CV or the number may differ for some or all layers. Optionally, zero-padding P may be used.

In embodiments, downstream of the sequence of convolutional layers there may be one or more fully connected layers FC (only one is shown) to produce the classification result, that is, the segmented image I' or the segmentation map.

Each layer $L_i$ processes an input feature map from an earlier layer into an intermediate output, sometimes referred to as logits. An optional bias term may be applied by addition for example. An activation layer processes in a non-linear manner the logits into a next generation feature map which is then output and passed as input to the next layer, and so forth. The activation layer may be implemented as a rectified linear unit ReLU as shown, or as a *soft-max*-function, a sigmoid-function, *tanh*-function or any other suitable non-linear function. Optionally, there may be other functional layers such as pooling layers or drop-out layers to foster more robust learning. The pooling layers reduce dimension of output whilst drop-out layer sever connections between node from different layers.

A convolutional layer $L_{1-N}$ is distinguished from a fully connected layer FC in that an entry in the output feature map of a convolutional layer is not a combination of all nodes received as input of that layer. In other words, the convolutional kernel is only applied to sub-sets of the input image to the feature map as received from an earlier convolutional layer. The sub-sets are different for each entry in the output feature map. The operation of the convolution operator can thus be conceptualized as a "sliding" over the input, akin to a discrete filter kernel in a classical convolution operation known from classical signal processing. Hence the naming "convolutional layer". In a fully connected layer FC, an output node is in general obtained by processing all nodes the previous layer.

In embodiments, the output layer OL may be configured as a combiner layer, such as a *soft-max*-function layer or as similar computational nodes where feature maps from previous layer(s) are combined into normalized counts to represent the classification probability per class. The classification result provided by the network M may include a binary classification into two labels if for example only one organ type is of interest. In multi-organ/tissue classifications, a multi-label classification result may be provided by the output layer OL.

If patient bio-characteristics, or other non-image contextual data CXD, is to be co-processed in addition to the image data I, this may need to be transformed first into a suitable representation or encoding, as on-image context data CXD may suffer from sparse representation which may be undesirable for efficient processing alongside the image data. One-hot encoding and processing by an autoencoder network may be used to transform the non-image context data CXD into a more suitable, denser representation which may be then processed alongside the image data by the model M.

It will be understood that the above-described model M in Figure 4 is merely according to one embodiment and is not limiting to the present disclosure. Other neural network architectures are also envisaged herein with more or less or different functionalities than describe herein. Multi-model networks, such as GAN (generative adversarial networks as reported by I Goodfellow et al in "Generative Adversarial Networks", submitted June 2014, arXiv:1406.2661. What is more, models M envisaged herein are not necessarily of the neural network type at all, such as support vector machines, decision trees, random forests, etc. Other, model-based or instance-based ML techniques are also envisaged herein. The model-based approaches may be of the discriminative type as the NN in Figure 4, or may be of the generative type. Instance-based approaches for segmentation include k-NN ("nearest neighbor")-approaches for example. Classical statistical classification methods based on sampling from training data are also envisaged herein in alternative embodiments. Still other techniques may include Bayesian networks, or random fields, such as Markov type random field and others.

Figure 5 shows a training system for training a machine learning model for use as a second segmentation module which is not based on shape priors. In the above-described exemplary model-based approach, such as a NN-type model M, the totality of the weights for all convolutional filter kernels, fully connected layers, output layers, etc., define a configuration of the machine learning model. The weights may differ for each layer. It is in particular these weights that are learned in the training phase. Once the training phase has concluded, the fully learned weights, together with the architecture in which the nodes are arranged, can be stored in one or more data memories MEM' and can be used for deployment.

Reference is now made to Figure 5, which shows a training system TS for training the parameters in a model-based ML algorithm, such a neural network-type model, or for training a non-neural network type ML model.

In supervised learning, the training data comprises $k$ pairs of data $(x_k, y_k)$. k may run into the 100s or 1000s. The training data comprises for each pair *k* (the index *k* is not related to the index used above to designate generation of feature maps), training input data $x_k$ and an associated target $y_k$. The training data is thus organized in pairs *k* in particular for supervised learning schemes as mainly envisaged herein. However, it should be noted that non-supervised learning schemes are not excluded herein.

The training input data $x_k$ may be obtained from historical image data acquired in a lab or previously in a clinic and held in image repositories, such as the PACS of a HIS (hospital information system) for instance. The targets $y_k$ or "ground truth" may represent the segmentation map or segmented image associated with (un-segmented) image $x_k$. Such labels may include segmentations, annotations or contouring by a human expert. Such labels may be retrieved from PACS databases or other medical data repositories. Historical imagery may include previously segmented imagery. It may also be possible in some embodiments to generate the non-segmented versus segmented training data pairs from simulation.

If training is to include contextual data CXD, there is in general no contextual data included in the target $y_k$. In other words, for learning with contextual data the pairs may in general have a form $((x_2, c), y_k)$, with non-image context data *c* only associated with the training input $x_k$, but not with the target $y_k$.

In the training phase, an architecture of a machine learning model M, such as the NN in Figure 4, is pre-populated with initial set of weights. The weights $\theta$ of the model NN represent a parameterization $M^\theta$, and it is the object of the training system TS to optimize and hence adapt the parameters $\theta$ based on the training data $(x_k, y_k)$ pairs. In other words, the learning can be formulized mathematically as an optimization scheme where a cost function *F* is minimized although the dual formulation of maximizing a utility function may be used instead.

Assuming for now the paradigm of a cost function *F*, this measures the aggregated residue(s), that is, the error incurred between data estimated by the model M and the targets as per some or all of the training data pairs *k*:

$$argmin_\theta F = \sum_k || M^\theta(x_k), y_k || \qquad (2)$$

In eq. (2) and below, function M() denotes the result of the model M applied to input $x_k$. For classifiers as mainly envisaged herein, the distance measure $\| \cdot \|$ is preferably formulated as one of cross-entropy or Kullback-Leiber divergence or similar. Any suitable distance measure can be used.

In training, the training input data $x_k$ of a training pair is propagated through the initialized network M. Specifically, the training input $x_k$ for a *k*-th pair is received at an input IL of model M, passed through the model and is then output at output OL as output training data $M^\theta(x)$. The measure $\| \cdot \|$ is configured to measure the difference, also referred to herein as residue, between the actual training output $M^\theta(x_k)$ produced by the model M, and the desired target $y_k$.

The output training data $M(x_k)$ is an estimate for target $y_k$ associated with the applied input training image data $x_k$. In general, there is an error between this output $M(x_k)$ and the associated target $y_k$ of the presently considered *k*-th pair. An optimization scheme such as backward/forward propagation or other gradient-descent based methods may then be used to adapt the parameters $\theta$ of the model M so as to decrease the aggregated residue (the sum in (2)) for all or a subset of pair $(x_k, y_k)$ the full training data set.

After one or more iterations in a first, inner, loop in which the parameters $\theta$ of the model are updated by updater UP for a current pair $(x_k, y_k)$, the training system TS enters a second, an outer, loop where a next training data pair $x^{k+1}, y^{k+1}$ is processed accordingly. The structure of updater UP depends on the optimization scheme used. For example, the inner loop as administered by updater UP may be implemented by one or more forward and backward passes in a forward/backpropagation algorithm. While adapting the parameters, the aggregated, for example summed (2), residues of all the training pairs are considered up to the current pair, to improve the objective function. The aggregated residue can be formed by configuring the objective function *F* as a sum of squared residues such as in eq. (2) of some or all considered residues for each pair. Other algebraic combinations instead of sums of squares are also envisaged. The training proceeds in alternation through the inner and outer loop until or a desired minimum number of training data pairs have been processed.

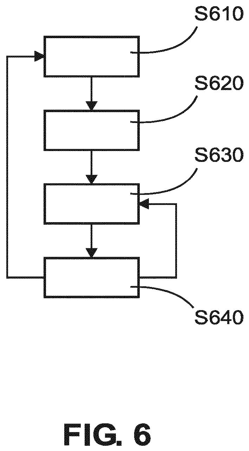

The training system as shown in Figure 5 can be considered for all model-based learning schemes, in particular supervised schemes. Unsupervised learning schemes may also be envisaged herein in alternative embodiments. Whilst Figure 5 mainly relates to model-based learning, instant-based learning schemes are also envisaged instead in alternative embodiments. Also, whilst Figures 5 and 6 (Figure 6 discussed below) relate to parameterized models, non-parametric ML algorithms are not excluded herein. GPUs may be used to implement the training system TS.

The fully trained machine learning module M may be stored in one or more memories MEM' or databases, and can be made available as pre-trained machine learning model M for segmentor SEG2. The trained model may be made available in a cloud service. Access can either be offered free of charge or their use can be granted via license-pay or pay-per-use scheme.

Figure 6 shows a flow chart of a method of training a machine learning model such as the one described above in Figure 4, or others.

Suitable training data needs to be collated. Preferably, supervised learning schemes are envisaged herein although this is not a necessity as unsupervised, or at least-semi-unsupervised learning setups are also envisaged herein.

In supervised learning, the training data includes suitable pairs of data items, each pair including training input data and associated therewith a target training output data. The imagery or the projection data can be paired up by retrieving the same from databases or other image repositories, as described above.

With continued reference to Figure 6, at step S610 training data is received in the form of pairs $(x_{kx}, y_k)$. Each pair includes the training input $x_k$ and the associated target $y_k$. $x_k$, as defined in Figure 5 above.

At step S620, the training input $x_k$ is applied to an initialized machine learning model M to produce a training output.

At step S630 a deviation, or residue, of the training output M(x) from the associated target $y_k$ (the segmentation (map)) is quantified by a cost function $F$. One or more parameters of the model are adapted at step S640 in one or more iterations in an inner loop to improve the cost function. For instance, the model parameters are adapted to decrease residues as measured by the cost function. The parameters include in particular weights $W$ of the convolutional operators, in case a convolutional NN model M is used.

The training method then returns in an outer loop to step S610 where the next pair of training data is fed in. In step S620, the parameters of the model are adapted so that the aggregated residues of all pairs considered are decreased, in particular minimized. The cost function quantifies the aggregated residues. Forward- backward propagation or similar gradient-based techniques may be used in the inner loop.

More generally, the parameters of the model M are adjusted to improve objective function $F$ which is either a cost function or a utility function. In embodiments, the cost function is configured to the measure the aggregated residues. In embodiments the aggregation of residues is implemented by summation over all or some residues for all pairs considered. The method may be implemented on one or more general-purpose processing units PU, preferably having processors capable for parallel processing to speed up the training.

Whilst Figure 6 relates to a parameterized, model-based training, non-parameterized ML training schemes and/or instance-based ML training schemes area also envisaged herein in embodiments.

The components of the image processing system IPS or training system TS may be implemented as one or more software modules, run on one or more general-purpose processing units PU such as a workstation associated with the imager IA, or on a server computer associated with a group of imagers.

Alternatively or in addition, some or all components of the image processing system IPS or training system TS may be arranged in hardware such as a suitably programmed microcontroller or microprocessor, such an FPGA or as a hardwired IC (integrated circuit) chip or an ASIC, integrated into the training system TS or image processing system IPS. In a further embodiment still, image processing system IPS or training system TS may be implemented in both, partly in software and partly in hardware.

The different components of the image processing system IPS or training system TS may be implemented on a single data processing unit PU. Alternatively, some or more components are implemented on different processing units PU, possibly remotely arranged in a distributed architecture and connectable in a suitable communication network such as in a cloud setting or client-server setup, etc. In particular, the two segmentors SEG1, SEG2 may run on the same or different computing system(s), whilst the differentiator DIF may run on yet another system, possibly remote from at least one of the system(s) on which the segmentor(s) SEG1, SEG2 run. For processing as described herein, the segmentation maps may be transmitted by a communication network to the differentiator DIF, or may be retrieved by the differentiator DIF from a data storage, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

**EP 4 233 001 B1**

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1.    System for image processing, the system comprising:

at least one input interface (IN) for receiving two segmentation maps for an input image, the two segmentation maps (I1, I2) obtained by respective segmentors, a first segmentor (SEG1) and a second segmentor (SEG2), the first segmentor (SEG1) configured to implement a shape-prior-based segmentation algorithm, and the second segmentor (SEG2) configured to implement a segmentation algorithm that is not based on a shape-prior, or the second segmentor (SEG2) accounting for one or more shape priors at a lower weight as compared to the first segmentor (SEG1), and
a differentiator (DIF) configured to ascertain a difference between the two segmentation maps, **characterized in that** the differentiator is further configured to detect an anatomical abnormality from said difference.

2.    System of claim 1, wherein the differentiator is configured to detect the anatomical abnormality based on the difference between the two segmentation maps exceeding a fixed or user defined threshold.

3.    System of claims 1 or 2, comprising a visualizer (VIZ) configured to output an indication of the said difference.

4.    System of claim 3, wherein the visualizer is configured to effect display on a display device (DD) of the indication and i) the input image or ii) the first or second segmentation map.

5.    System of claims 3 or 4, wherein the visualizer is configured to code the said indication to represent a magnitude of said difference.

6.    System of any one of previous claims, wherein the second segmentor (SEG2) is based on a machine learning model.

7.    System of claim 6, wherein the machine learning model is based on an artificial neural network (M).

12

8. System of any of the previous claims, wherein segmentations in the two segmentation maps represent any one or more of i) bone tissue, ii) cancerous tissue.

9. System of claim 8, wherein the said anatomical abnormality is bone fracture and wherein the said difference is indicative of the said bone fracture.

10. System of any of the previous claims, wherein the input image is any one of i) an X-ray image, ii) an emission image, iii) a magnetic resonance, MR, image, iv) an ultrasound image.

11. An imaging arrangement (AR) comprising an imaging apparatus (IA) and a system of any one of the previous claims.

12. A computer-implemented image processing method, comprising:

receiving (S320) two segmentation maps for an input image, the two segmentation maps (I1, I2) obtained by respective segmentors, a first segmentor (SEG1) and a second segmentor (SEG2), the first segmentor (SEG1) implementing a shape-prior-based segmentation algorithm, the second segmentor (SEG2) implementing a segmentation algorithm that is not based on a shape-prior, or the second segmentor (SEG2) accounting for one or more shape priors at a lower weight as compared to the first segmentor (SEG1), and
ascertaining (S330) a difference between the two segmentation maps,

**characterized by**
detecting (S340) an anatomical abnormality from said difference.

13. A computer program element including instructions, which, when being executed by at least one processing unit, is adapted to cause the processing unit to perform the method as per claim 12.

14. At least one computer readable medium having stored thereon the program element of claim 13.


**Patentansprüche**

1. System zur Bildverarbeitung, wobei das System umfasst:

mindestens eine Eingangsschnittstelle (IN) zum Empfangen von zwei Segmentierungskarten für ein Eingangsbild, wobei die zwei Segmentierungskarten (11, 12) von jeweiligen Segmentierern, einem ersten Segmentierer (SEG1) und einem zweiten Segmentierer (SEG2), erhalten werden, wobei der erste Segmentierer (SEG1) konfiguriert ist, um einen auf Shape-Prior basierenden Segmentierungsalgorithmus zu implementieren, und der zweite Segmentierer (SEG2) konfiguriert ist, um einen Segmentierungsalgorithmus zu implementieren, der nicht auf einem Shape-Prior basiert, oder der zweite Segmentierer (SEG2) einen oder mehrere Shape-Priors mit einer geringeren Gewichtung im Vergleich zum ersten Segmentierer (SEG1) berücksichtigt, und
ein Differenzierglied (DIF), das konfiguriert ist, um einen Unterschied zwischen den zwei Segmentierungskarten festzustellen, **dadurch gekennzeichnet, dass** das Differenzierglied weiter konfiguriert ist, um aus diesem Unterschied eine anatomische Abnormität zu erkennen.

2. System nach Anspruch 1, wobei das Differenzierglied konfiguriert ist, um die anatomische Abnormität basierend auf dem Unterschied zwischen den zwei Segmentierungskarten zu erkennen, der einen festen oder vom Benutzer definierten Schwellenwert überschreitet.

3. System nach den Ansprüchen 1 oder 2, umfassend einen Visualisierer (VIZ), der konfiguriert ist, um eine Angabe des Unterschieds auszugeben.

4. System nach Anspruch 3, wobei der Visualisierer konfiguriert ist, um eine Anzeige auf einer Anzeigevorrichtung (DD) der Angabe und i) des Eingangsbilds oder ii) der ersten oder zweiten Segmentierungskarte zu bewirken.

5. System nach den Ansprüchen 3 oder 4, wobei der Visualisierer konfiguriert ist, um die Angabe zu codieren, um eine Größe des Unterschieds darzustellen.

6. System nach einem der vorstehenden Ansprüche, wobei der zweite Segmentierer (SEG2) auf einem maschinellen Lernmodell basiert.

7. System nach Anspruch 6, wobei das maschinelle Lernmodell auf einem künstlichen neuronalen Netzwerk (M) basiert.

8. System nach einem der vorstehenden Ansprüche, wobei Segmentierungen in den zwei Segmentierungskarten eines oder mehr von i) Knochengewebe, ii) Krebsgewebe darstellen.

9. System nach Anspruch 8, wobei die anatomische Abnormität ein Knochenbruch ist und wobei der Unterschied auf den Knochenbruch hinweist.

10. System nach einem der vorstehenden Ansprüche, wobei das Eingangsbild eines von i) einem Röntgenbild, ii) einem Emissionsbild, iii) einem Magnetresonanz-, MR-Bild, iv) einem Ultraschallbild ist.

11. Bildgebungsanordnung (AR), die eine Bildgebungseinrichtung (IA) und ein System nach einem der vorstehenden Ansprüche umfasst.

12. Computerimplementiertes Bildverarbeitungsverfahren, umfassend:

Empfangen (S320) von zwei Segmentierungskarten für ein Eingangsbild, wobei die zwei Segmentierungskarten (11, 12) von jeweiligen Segmentierern, einem ersten Segmentierer (SEG1) und einem zweiten Segmentierer (SEG2), erhalten werden, wobei der erste Segmentierer (SEG1) einen auf Shape-Prior basierenden Segmentierungsalgorithmus implementiert, der zweite Segmentierer (SEG2) einen Segmentierungsalgorithmus implementiert, der nicht auf einem Shape-Prior basiert, oder der zweite Segmentierer (SEG2) einen oder mehrere Shape-Priors mit einer geringeren Gewichtung im Vergleich zum ersten Segmentierer (SEG1) berücksichtigt, und
Ermitteln (S330) eines Unterschieds zwischen den zwei Segmentierungskarten,
**gekennzeichnet durch**
Erkennen (S340) einer anatomischen Abnormität aus dem Unterschied.

13. Computerprogrammelement, das Anweisungen beinhaltet, die, wenn sie von mindestens einer Verarbeitungseinheit ausgeführt werden, angepasst sind, um die Verarbeitungseinheit zu veranlassen, das Verfahren nach Anspruch 12 durchzuführen.

14. Mindestens ein computerlesbares Medium, das darauf gespeichert das Programmelement nach Anspruch 13 aufweist.

**Revendications**

1. Système de traitement d'image, le système comprenant :

au moins une interface d'entrée (IN) pour recevoir deux cartes de segmentation pour une image d'entrée, les deux cartes de segmentation (11, 12) étant obtenues par des segmenteurs respectifs, un premier segmenteur (SEG1) et un second segmenteur (SEG2), le premier segmenteur (SEG1) étant configuré pour mettre en œuvre un algorithme de segmentation basé sur un a priori de forme, et le second segmenteur (SEG2) étant configuré pour mettre en œuvre un algorithme de segmentation qui n'est pas basé sur un a priori de forme, ou le second segmenteur (SEG2) prenant en compte un ou plusieurs a priori de forme avec un poids inférieur par rapport au premier segmenteur (SEG1), et
un différenciateur (DIF) configuré pour déterminer une différence entre les deux cartes de segmentation, **caractérisé en ce que** le différenciateur est en outre configuré pour détecter une anomalie anatomique à partir de ladite différence.

2. Système selon la revendication 1, dans lequel le différenciateur est configuré pour détecter l'anomalie anatomique sur la base de la différence entre les deux cartes de segmentation dépassant un seuil fixé ou défini par l'utilisateur.

3. Système selon la revendication 1 ou 2, comprenant un visualiseur (VIZ) configuré pour délivrer une indication de ladite différence.

**4.** Système selon la revendication 3, dans lequel le visualiseur est configuré pour réaliser un affichage sur un dispositif d'affichage (DD) de l'indication et i) de l'image d'entrée ou ii) de la première ou de la seconde carte de segmentation.

**5.** Système selon les revendications 3 ou 4, dans lequel le visualiseur est configuré pour coder ladite indication pour représenter une grandeur de ladite différence.

**6.** Système selon l'une quelconque des revendications précédentes, dans lequel le second segmenteur (SEG2) est basé sur un modèle d'apprentissage automatique.

**7.** Système selon la revendication 6, dans lequel le modèle d'apprentissage automatique est basé sur un réseau neuronal artificiel (M).

**8.** Système selon l'une quelconque des revendications précédentes, dans lequel des segmentations dans les deux cartes de segmentation représentent un quelconque ou plusieurs parmi i) un tissu osseux, ii) un tissu cancéreux.

**9.** Système selon la revendication 8, dans lequel ladite anomalie anatomique est une fracture osseuse et dans lequel ladite différence est indicative de ladite fracture osseuse.

**10.** Système selon l'une quelconque des revendications précédentes, dans lequel l'image d'entrée est l'une quelconque parmi i) une image radiographique, ii) une image d'émission, iii) une image par résonance magnétique, RM, iv) une image échographique.

**11.** Agencement d'imagerie (AR) comprenant un système d'imagerie (IA) et un système selon l'une quelconque des revendications précédentes,

**12.** Procédé de traitement d'image mis en œuvre par ordinateur, comprenant :

la réception (S320) de deux cartes de segmentation pour une image d'entrée, les deux cartes de segmentation (11, 12) étant obtenues par des segmenteurs respectifs, un premier segmenteur (SEG1) et un second segmenteur (SEG2), le premier segmenteur (SEG1) mettant en œuvre un algorithme de segmentation basé sur un a priori de forme, le second segmenteur (SEG2) mettant en œuvre un algorithme de segmentation qui n'est pas basé sur un a priori de forme, ou le second segmenteur (SEG2) prenant en compte un ou plusieurs a priori de forme avec un poids inférieur par rapport au premier segmenteur (SEG1), et
la détermination (S330) d'une différence entre les deux cartes de segmentation,
**caractérisé par**
la détection (S340) d'une anomalie anatomique à partir de ladite différence.

**13.** Élément de programme informatique incluant des instructions, qui, lorsqu'il est exécuté par au moins une unité de traitement, est adapté pour amener l'unité de traitement à réaliser le procédé selon la revendication 12.

**14.** Au moins un support lisible par ordinateur présentant stocké sur celui-ci l'élément de programme selon la revendication 13.

**FIG. 1**

**FIG. 2A**

**FIG. 2B**

Δ

**FIG. 2C**

**FIG. 3**

**FIG. 4**

**FIG. 5**

S610

S620

S630

S640

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL**. Machine Learning. McGraw-Hill, 1997, 2
- **O ECABERT et al.** Automatic model-based segmentation of the heart in CT images. *IEEE Trans. Med. Imaging*, 2008, vol. 27 (9), 1189-11201
- **I GOODFELLOW et al.** Generative Adversarial Networks. *arXiv:1406.2661*, June 2014